# EUROPEAN PATENT SPECIFICATION

(11) **EP 1 240 044 B1**
(45) Date of publication and mention of the grant of the patent: **21.04.2004**
(21) Application number: 00986121.2
(22) Date of filing: 06.12.2000
(51) Int. Cl.: B60K 23/04, B60T 8/00

(54) **ARRANGEMENT AT A VEHICLE WITH A DIFFERENTIAL LOCK**
DIFFERENTIALSPERRENANORDNUNG AN EINEM FAHRZEUG
AGENCEMENT DE SYSTEME DE BLOCAGE DU DIFFERENTIEL, SUR UN VEHICULE

(30) Priority: 09.12.1999 SE 9904487
(43) Date of publication of application: 18.09.2002
(73) Proprietor: Scania CV Aktiebolag (publ), 151 87 Södertälje (SE)
(72) Inventor: AHLGREN, Thomas, S-146 46 Tullinge (SE)
(74) Representative: Waldebäck, Hans Olov
(86) International application number: PCT/SE2000/002435
(87) International publication number: WO 2001/042038

(56) References cited:
- DE-A1- 4 010 551
- US-A- 3 706 351
- US-A- 4 759 589
- US-A- 5 071 392

## Description

### Technical area

The invention relates to a device for motor vehicles with a differential lock, as described in the preamble of patent claim 1.

Such a device is known from DE-A-40 10 551.

### Technology standpoint

It is quite customary to equip motor-driven wheeled vehicles with a differential lock at the differential gear on a driven axle with the object of improving accessibility when road conditions are poor. When the differential lock is engaged, the wheels on this axle are locked relative to each other. However, when road conditions improve, it is quite possible the driver forgets that the differential lock is engaged or is unable to disengage the differential lock due to mechanical reasons. In this way and in unfortunate circumstances, the differential lock can be subjected to forces that are considerably larger that those that it is normally subjected to.

A driving situation of this type can occur when the vehicle, with a full load and with the differential lock engaged, actually in a normal manner turns sharply on a road surface with good grip, without braking and without a driving or braking torque from the engine. This is what can happen if the driver declutches and changes gear when driving in a curve with the differential lock engaged. Under these circumstances the differential lock can be overloaded so it is subjected to a torque that is twice as great compared to driving straight ahead with the engine at full power. Although this is a situation that can be called abnormal and is caused by incorrect handling, it is still necessary for safety reasons to over-dimension the differential lock to withstand such a driving situation.

### Object of the invention

The object of the invention is, in a situation like the one described above, to make safe driving possible without having to over-dimension the differential lock. A second object is to make this possible in a simple way.

### Description of the invention

The object of the invention is achieved using a device that has the characteristics specified in patent claim 1.

By utilising components in the vehicle brake system, it is possible with the differential lock engaged to supervise the size of the parameter that represents any difference in the rotation angle between the wheels on a driven axle, which also represents the difference in relative rotation of the drive shafts.
Using the vehicle brake system, it is possible to brake one of the wheels when a predetermined value of angular difference is reached. Thus it is possible to reduce the forces that the differential lock can be subjected to, in a safe and simple way. The equipment can be arranged to decrease the braking when the mutual angular difference between the wheels/drive shafts has reduced to a predetermined value.

On this basis it is possible to use with good results a considerably smaller differential lock compared to that required previously. The differential lock can in this way be made lighter and more compact compared to previously.

Further distinctive features and advantages of the invention can be found in the following description and other patent claims. The invention is explained in more detail below and with the help of an embodiment example on the enclosed drawing.

### Description of figures

On the drawings:
Fig. 1 shows a schematic view of a motor vehicle driving through a curve, and
Fig. 2 shows a block diagram of a device according to the invention.

### Description of embodiment example

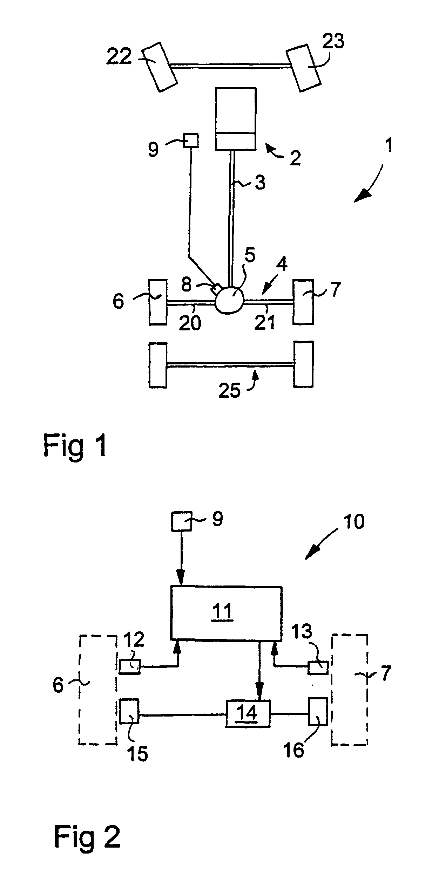

Fig.1 shows a motor-driven wheeled vehicle 1 in a left-hand turn. This is evident because the front steering wheels 22, 23 of the vehicle are turned to the left. At the front of the vehicle 1 is a power unit 2, in the form of an internal combustion engine, which is connected rear-wise to a propeller shaft 3 that transfers the driving power to the drive wheels via a rear axle 4. The propeller shaft 3 is connected in the conventional way to a rear axle gear equipped with a differential gear 5, which in turn is connected via two drive shafts 20, 21 to the rear wheels 6, 7 of the vehicle. Fig. 1 also shows that the vehicle has a tag axle 25 equipped with non-driving wheels, which suggests it is a heavier type of vehicle such as a truck.

The differential gear 5 is equipped with a conventional differential lock, but not shown in detail, which is used to lock the drive shafts 20 and 21 together. The rear axle wheels 6 and 7 are thus indirectly also locked mechanically together. There is a control at the vehicle driver's seat connected to an actuator 8 that is used to engage and disengage the differential lock. There is also an indicator 9 at the driver's seat that shows the driver whether or not the differential lock is engaged.

It is intended that the differential lock is engaged when the vehicle is driven on slippery roads. The normal function of the differential gear 5 is then disconnected and both drive wheels 6, 7 are driven instead at the same speed.

If however the vehicle 1 is in a driving situation similar to that shown in Fig.1, with the differential lock engaged on a road with good friction and fully loaded, the driver may happen to declutch and change gear. Since the outer wheel 7 in a curve tries to rotate faster than the inner wheel 6, a relative rotation of the drive shafts 20, 21 that are attached to these wheels occurs, which results in the differential lock being subjected to considerable stress.

According to the invention, stresses of the type mentioned above can be reduced using a device 10, as shown schematically in Fig. 2. This includes a control unit to which the indicator 9 is connected in order to be able to show whether or not the differential lock is engaged in the current driving situation. Individual wheel angle sensors 12 and 13 are connected to the control unit 11. These are located at the drive wheels 6 and 7 and are a part of the vehicle's ordinary brake system of the ABS type. Using these wheel angle sensors 12 and 13, the rotation of the respective wheels can be sensed and the control unit 11 can thus supervise any differences in the rotation angles between the two drive wheels 6 and 7. The control unit 11 can thus also supervise any differences in the rotation angles between the drive shafts 20 and 21.

Based on information from the indicator 9 and the wheel angle sensors 12, 13, the control unit 11 can provide control signals to a brake regulator 14, which in turn controls the brake actuators 15 and 16 on the wheels 6 and 7.
The brake regulator 14 and the brake actuators 15, 16 are also included to advantage in the vehicle's ordinary braking system and together with the control unit 11enable the required braking of one or both drive wheels 6, 7. The control unit 11 need not necessarily be a separate unit. It can well be a part of the ordinary control unit for the braking system. On vehicles equipped with Traction Control System, i.e. a system that controls the driving power from the engine to the drive wheels with the object of preventing excessive spinning of the wheels, the described device 10 can very well be included in this system.

### The function of the described device 10 is as follows:

When the respective angle of rotation between wheels 6 and 7, registered via the wheel angle sensors 12, 13, reaches a predetermined marginal value, e.g. 30°, the control unit 11 activates the brake regulator 14 to brake one of the drive wheels 6, 7. Since the outer wheel rotates faster than the inner wheel when travelling in a curve, the outer wheel must be subjected to braking, in this case the right-hand wheel 7. When the relative angle of rotation between the wheels has been reduced to a predetermined value, the braking on the outer wheel is released. If the relative angle of rotation between the wheels again exceeds the predetermined value, the process is repeated one or more times until the troublesome situation ceases.

The size of the relative angle of rotation between the wheels that is acceptable, is of course a function of the size of the load that is to be allowed on the differential lock. By being able to limit the stresses on the differential lock in this way, it becomes possible to slim the differential lock and thus make it smaller and lighter.

The execution described here can be varied in different ways within the framework of the invention as defined by the claims, depending on requirements and wishes. An example of an alternative execution is that the wheel brake in question can be activated either with max. braking power or with a regulated brake torque adapted to suit the current angular difference between the drive shafts/drive wheels.

## Claims

1. Device on a motor vehicle, where there is a differential gear (5) on a wheel axle (4) between driving wheels (6,7) and a differential lock that can be engaged to lock the driving wheels relative to each other, and where there are sensors (12, 13) at the driving wheels that are connected to a control unit (11) that regulates a braking force to the wheels, the control unit (11) is arranged to determine any relative rotation between the wheels (6, 7), when the differential lock is engaged, based on signals received from the sensors (12, 13), **characterised in that** the device includes an ordinary brake system able to brake the wheels of the vehicle, whereby when the relative rotation between the locked driving wheels (7, 8) reaches a predetermined marginal value, the control unit also causes one of the driving wheels to be braked with the object of limiting the relative rotation between the wheels.

2. Device according to claim 1, **characterised in that** the control unit (11) is arranged to decrease the braking force when the relative rotation between the wheels is reduced to a predetermined value.

3. Device according to claims 1 o 2, **characterised in that** the control unit (11), when travelling in a curve, is arranged to brake the wheel that moves outermost in the curve.

4. Device according to claims 1-3, **characterised in that** the control unit (11) is a part of the ordinary brake system of the vehicle.

5. Device according to claims 1-3, **characterised in that** the control unit (11) is a part of the ordinary traction control system of the vehicle.

## Patentansprüche

1. Vorrichtung an einem Kraftfahrzeug, bei dem auf einer Radachse (4) zwischen Antriebsrädern (6, 7) ein Differenzialgetriebe (5) angeordnet ist sowie eine Differenzialsperre, die eingelegt werden kann, um die Antriebsräder in Bezug zueinander zu sperren, und bei der an den Antriebsrädern Sensoren (12, 13) angeordnet sind, die mit einer Steuereinheit (11) verbunden sind, welche eine Bremskraft an den Rädern regelt, wobei die Steuereinheit dazu ausgebildet ist, gestützt auf von den Sensoren (12, 13) empfangene Signale jegliche Relativdrehung zwischen den Rädern (6, 7) festzustellen, wenn die Differenzialsperre eingelegt ist, **dadurch gekennzeichnet, dass** die Vorrichtung ein gewöhnliches Bremssystem umfasst, das im Stande ist, die Räder des Fahrzeugs zu bremsen, wobei, wenn die Relativdrehung zwischen den gesperrten Antriebsrädern (6, 7) einen vorbestimmten Grenzwert erreicht, die Steuereinheit auch veranlasst, dass eines der Antriebsräder gebremst wird mit dem Ziel, die Relativdrehung zwischen den Rädern zu begrenzen.

2. Vorrichtung nach Anspruch 1, **dadurch gekennzeichnet, dass** die Steuereinheit (11) dazu ausgebildet ist, die Bremskraft zu vermindern, wenn die Relativdrehung zwischen den Rädern auf einen vorbestimmten Wert abgenommen hat.

3. Vorrichtung nach Anspruch 1 oder 2, **dadurch gekennzeichnet, dass** die Steuereinheit (11) dazu ausgebildet ist, bei Kurvenfahrt das sich an der Kurvenaußenseite bewegende Rad zu bremsen.

4. Vorrichtung nach den Ansprüchen 1 - 3, **dadurch gekennzeichnet, dass** die Steuereinheit (11) ein Bestandteil des gewöhnlichen Bremssystems des Fahrzeugs ist.

5. Vorrichtung nach den Ansprüchen 1 - 3, **dadurch gekennzeichnet, dass** die Steuereinheit (11) ein Bestandteil des gewöhnlichen Traktionsregelsystems des Fahrzeugs ist.

## Revendications

1. Dispositif situé sur un véhicule à moteur, où se trouvent un engrenage différentiel (5) situé sur un essieu de roues (4) entre des roues d'entraînement (6, 7) et un verrou de différentiel qui peuvent être mis en prise pour verrouiller les roues d'entraînement l'une par rapport à l'autre, et où se trouvent des détecteurs (12, 13) situés au niveau des roues d'entraînement qui sont connectés à une unité de commande (11) qui régule une force de freinage sur les roues, l'unité de commande (11) étant agencée pour déterminer une rotation relative quelconque entre les roues (6, 7) lorsque le verrou de différentiel est mis en prise, sur la base de signaux reçus à partir des détecteurs (12, 13), **caractérisé en ce que** le dispositif comporte un système de freins ordinaire capable de freiner les roues du véhicule, de manière à ce que, lorsque la rotation relative entre les roues d'entraînement verrouillées (7, 8) atteint une valeur limite prédéterminée, l'unité de commande amène également une des roues d'entraînement à être freinée dans le but de limiter la rotation relative entre les roues.

2. Dispositif selon la revendication 1, **caractérisé en ce que** l'unité de commande (11) est agencée pour diminuer la force de freinage lorsque la rotation relative entre les roues est réduite jusqu'à une valeur prédéterminée.

3. Dispositif selon la revendication 1 ou 2, **caractérisé en ce que** l'unité de commande (11), lors d'un déplacement dans une courbe, est agencée pour freiner la roue qui se déplace le plus à l'extérieur dans la courbe.

4. Dispositif selon l'une quelconque des revendications 1 à 3, **caractérisé en ce que** l'unité de commande (11) est une partie du système de freins ordinaire du véhicule.

5. Dispositif selon l'une quelconque des revendications 1 à 3, **caractérisé en ce que** l'unité de commande (11) est une partie du système de commande de traction ordinaire du véhicule.
